(19) Europäisches Patentamt European Patent Office Office européen des brevets

(11) **EP 2 198 945 A2**

(12) **EUROPEAN PATENT APPLICATION**

(43) Date of publication:
23.06.2010 Bulletin 2010/25

(51) Int Cl.:
**B01D 39/16** (2006.01) **B01D 46/52** (2006.01)

(21) Application number: **09176382.1**

(22) Date of filing: **18.11.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **21.11.2008 US 275751**

(71) Applicant: **BHA Group Holdings Inc.**
**Kansas City, MO 64133 (US)**

(72) Inventors:
• **Smithies, Alan**
**Overland Park, KS Kansas 66213 (US)**
• **Clements, Jack**
**Lee's Summit, MO Missouri 64064 (US)**
• **Polizzi, Cynthia**
**Lee's Summit, MO Missouri 64063 (US)**

(74) Representative: **Szary, Anne Catherine**
**GE International Inc.**
**Global Patent Operation - Europe**
**15 John Adam Street**
**London**
**WC2N 6LU (GB)**

(54) **Gas Turbine Inlet Air Filtration Filter Element**

(57)    A gas turbine air inlet filter element (70) is provided. The gas turbine air inlet filter element includes a first end cap (74), a second end cap (76), and a filter media (10). The filter media (10) includes a nonwoven synthetic fabric formed from a plurality of bicomponent synthetic fibers with a spunbond process, and having a bond area pattern (31) including a plurality of substantially parallel discontinuous lines (33) of bond area, the filter media having a minimum filtration efficiency of about 50%, measured in accordance with ASHRAE 52.2-1999 test procedure, the filter media further including an embossing pattern or a plurality of corrugations, the embossing pattern or the corrugations formed using opposing rollers (100,102) at a temperature of about 90°C to about 140°C.

FIG. 6

EP 2 198 945 A2

**Description**

BACKGROUND OF THE INVENTION

The field of the invention relates generally to gas turbine inlet air filtration, and more particularly, to a filter element having a corrugated or embossed nonwoven filter media.

Some known filter media constructs incorporate synthetic fibers or a blend of cellulose and synthetic fibers and utilizing a wet-laid paper making process to produce the substrate. In some other filter media constructs, an electro-spun technology is used to deposit a lightweight nanofiber coating on one or both sides of the filter media substrate. Typically the media substrate has a basis weight of 100-120 grams per square meter ($g/m^2$), and the nanofiber layer has a basis weight of 0.5 $g/m^2$ or less.

One problem associated with these known filter media constructs is the use of a stiffening binder or resin applied to the paper filter media to facilitate pleating of the paper filter media. However it is known that some of the binders used are crosslinked with formaldehyde based compounds. On occasion under climate conditions of high temperature and high humidity, off-gassing of formaldehyde can occur during filter manufacturing or during storage.

These known filter media constructs when used to filter inlet air of power generation gas turbines can permit fine dust particulates to penetrate the filter over the operating life of the filter. Particularly, when filter media formed from a cellulose/synthetic blended wet laid paper of a 100% synthetic wet laid paper, and utilizing resin stiffening binders, are used in a filter assembly, the initial fractional efficiency of the filter media range from a minimum of about 5% up to a maximum of about 30% capture of 0.3 to 0.4 $\mu$m particles when measured in accordance with ASHRAE 52.2-1999 test procedure. In composite filter media constructs with filter media formed from a cellulose/synthetic blended wet laid paper of a 100% synthetic wet laid paper, and including a nano-fiber layer, the initial fractional efficiency of the filter media is about 55% capture of 0.3 to 0.4 $\mu$m particles, at a pressure drop typically greater than 7.0 mm $H_2O$, when measured in accordance with ASHRAE 52.2-1999 test procedure.

It is known that as much as 15 to 20 pounds of dust can penetrate known filter media over a 24,000 hour operating life because of this low initial efficiency. Exposing the turbine blades to dust over an extended time can cause serious and catastrophic fouling and erosion of the turbine blades. The current procedure of cleaning the turbine blades requires taking the turbine off-line at periodic intervals to water wash the blades clean. Turbine down time is expensive because the turbine is not operating and therefore, power generation is curtailed. It would be desirable to provide a higher efficiency filter media than the known filter media to reduce or eliminate turbine down time to clean the turbine blades and/or the replacement of damaged blades.

BRIEF DESCRIPTION OF THE INVENTION

In one aspect, a gas turbine air inlet filter element is provided. The filter element includes a first end cap, a second end cap, and a filter media. The filter media includes a nonwoven synthetic fabric formed from a plurality of bicomponent synthetic fibers with a spunbond process, and having a bond area pattern that includes a plurality of substantially parallel discontinuous lines of bond area. The filter media has a minimum filtration efficiency of about 50%, measured in accordance with ASHRAE 52.2-1999 test procedure. The filter media also includes an embossing pattern or a plurality of corrugations. The embossing pattern or the corrugations are formed using opposing rollers at a temperature of about 90°C to about 140°C.

In another aspect, a filter media for a filter element is provided. The filter media includes a nonwoven synthetic fabric formed from a plurality of bicomponent synthetic fibers with a spunbond process, and having a bond area pattern that includes a plurality of substantially parallel discontinuous lines of bond area. The filter media has a minimum filtration efficiency of about 50%, measured in accordance with ASHRAE 52.2-1999 test procedure. The filter media also includes an embossing pattern or a plurality of corrugations. The embossing pattern or the corrugations are formed using opposing rollers at a temperature of about 90°C to about 140°C.

BRIEF DESCRIPTION OF THE DRAWINGS

FIG. 1 is cross sectional illustration of an exemplary aspect of a filter media.

FIG. 2 is a photomicrograph of bicomponent fibers used in the filter media shown in FIG. 1.

FIG. 3 is a photomicrograph of the filter media shown in FIG. 1.

FIG. 4 is a top illustration of the bond pattern of the filter media shown in Fig. 1.

FIG. 5 is cross sectional illustration of an exemplary aspect of the filter media shown in FIG. 1 after corrugating.

FIG. 6 is a cross sectional illustration of corrugation rollers in accordance with an exemplary aspect.

FIG. 7 is a side illustration of a filter cartridge that includes the filter media shown in FIG. 4.

FIG. 8 is an enlarged perspective illustration of a portion of the filter cartridge shown in FIG. 7.

FIG. 9 is a perspective illustration of a filter assembly that includes the filter cartridge shown in FIG. 7.

FIG. 10 is a schematic illustration of embossing rollers in accordance with an exemplary aspect.

FIG. 11 is a graph of fractional efficiency versus particle size of filter media at various basis weights in accordance with an exemplary aspect.

FIG. 12 is a graph of fractional efficiency versus particle size of the filter media shown in FIG. 1 to a comparative filter media.

FIG. 13 is a bar graph of pressure drop versus filter media in accordance with an exemplary aspect compared to a comparative filter media.

FIG. 14 is a graph of differential pressure versus time of a filter cartridge in accordance with an exemplary embodiment compared to known filter cartridges.

DETAILED DESCRIPTION OF THE INVENTION

A filter element for a gas turbine inlet air filtration system and a filter media are described in detail below. The filter media includes a filter media substrate of a synthetic nonwoven fabric that is formed from bicomponent fibers by a unique spunbond process. The filter media is corrugated or embossed to provide efficient separation of pleats which provides large passageways for low restriction air flow on both the "clean" and "dirty" sides of the composite filter media. The filter media provides an initial filtration efficiency of about 50% retained capture of 0.3-0.4 $\mu$m particles, when tested in accordance with the American Society of Heating, Refrigerating and Air-Conditioning Engineers (ASHRAE) 52.2-1999 test procedure. The filter media has a quality factor ($Q_f$) of greater than about 450, and in another embodiment, greater than about 500. Also, the filter media has a resistance (or pressure drop) of less than 2.5 mm water, measured in accordance with EN-1822 (1998).

Further, the filter media is more durable than known filter media and provides for lower pressure drop build-up because of less deflection of the filter media from the forces exerted on the filter media during the filtering and reverse cleaning operations. Also, the spunbond corrugated filter media is more efficient than known filter media at an equivalent or lower pressure drop. The bicomponent fibers used to form the filter media are finer than fibers used to form known filter media.

By "quality factor ($Q_f$) " is meant the parameter defined by the equation:

$$Q_f = -25000 \cdot \log(P/100)/\Delta p$$

Where "P" = particle penetration in % of filter media thickness, and "$\Delta p$" = pressure drop across the media in Pascals.

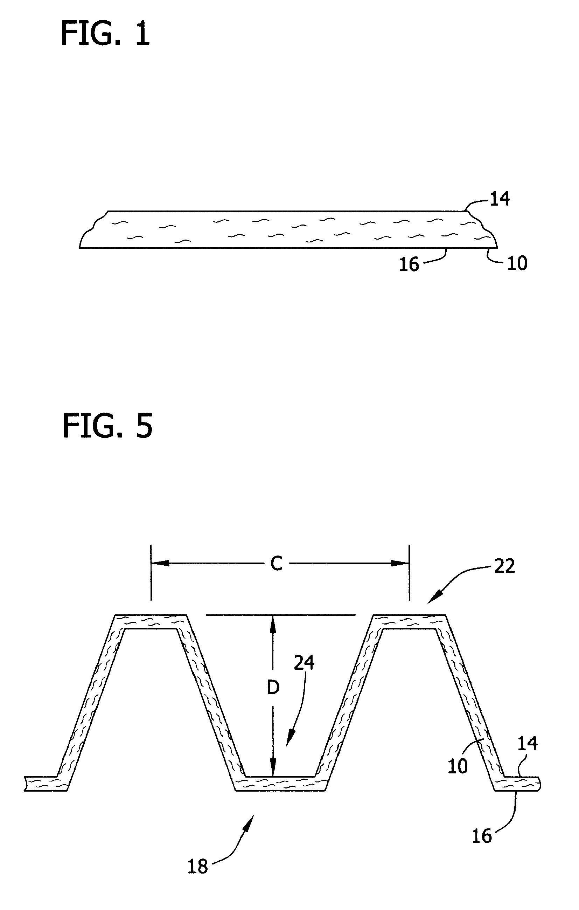

Referring to the drawings, FIG. 1 is a sectional illustration of an exemplary aspect of a composite filter media 10. Filter media 10 is a filter media substrate having a first side 14 and a second side 16. A plurality of corrugations 18 (shown in FIG. 5) are formed in filter media 10.

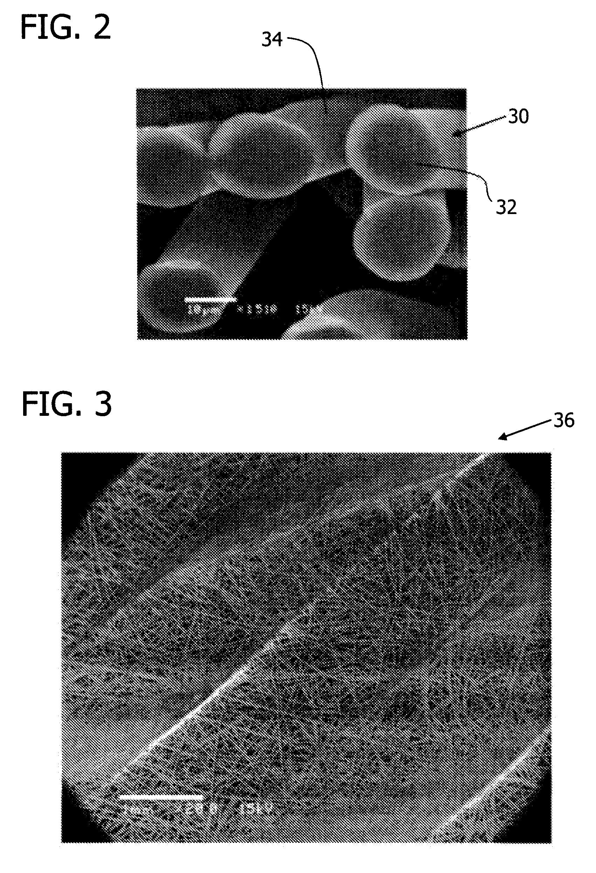

Filter media 10 is a nonwoven fabric formed from synthetic bicomponent fibers using a spunbond process. Suitable bicomponent fibers are fibers having a core-sheath structure, an island structure or a side-by-side structure. Referring also to FIG. 2, in the exemplary embodiment, a bicomponent fiber 30 includes a core 32 and a sheath 34 circumferentially surrounding core 32. Bicomponent fibers 30 are meltspun through jets into a plurality of continuous fibers which are uniformly deposited into a random three dimensional web. The web is then heated and embossed calendered which thermally bonds the web into a consolidated spunbond fabric 36, shown in FIG. 3. Heat from contact of the calender roll embossing pattern softens or melts the thermoplastic sheath 34 of bicomponent fibers 30 which binds the nonwoven fibers together only at the contact points of calender roll embossing pattern. The temperature is selected so that at least softening or fusing of the lower melting point sheath 34 portion of bicomponent fibers 30 occurs. In one embodiment, the temperature is about 90°C to about 240°C. The desired connection of the fibers is caused by the melting and re-solidification of sheath portion 34 after cooling.

Bicomponent fibers 30 have diameter of about 12 microns to about 18 microns which is finer than the known fibers used in traditional and common spunbond products. A unique aspect of base media substrate 12 is the bond pattern used to consolidate spunbond filter media 10. The bond pattern is defined by the embossing pattern of the calender rolls. The bond area of the spunbond bicomponent fibers in media 10 is about 10 percent to about 14 percent of the total area of the fabric as compared to the bond area of about 19 to 24 percent of traditional spunbond media used in filtration. The bond area provides for media durability and function while at the same time the bond points create areas of fused polymer that have zero air flow.

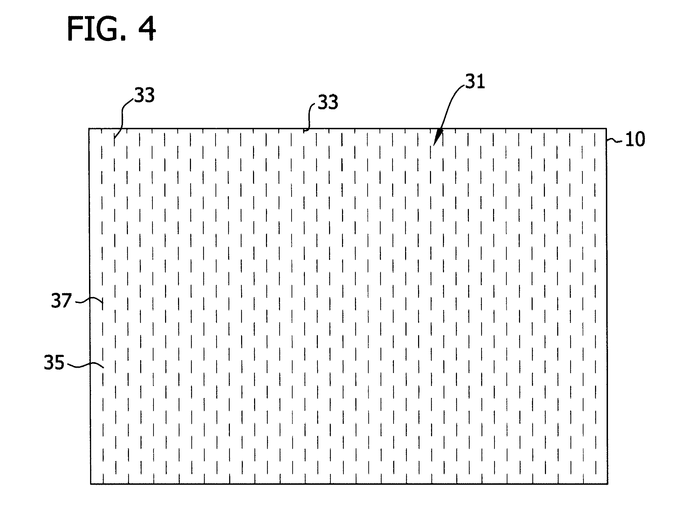

Referring also to FIG.4, a bond pattern 31 on filter media 10 attains an acceptable durability to filter media 10, while allowing more fiber to be available for filtration thus increasing filtration efficiency. Bond pattern 31 includes a plurality of parallel discontinuous lines 33 of bond area extending across filter media 10 and in a direction parallel to the machine direction (longitudinal extent) of filter media 10. The parallel discontinuous lines 33 of bond area are off-set from each other so that at a location of no bond area 35 in a discontinuous line 33 is aligned with a bond area 37 of an adjacent discontinuous line 33. The bond area 37 of spunbond bicomponent fibers 30 in filter media 10 is about 10 percent to about 16 percent of the total area of the fabric as compared to the bond area of about 19 to 24 percent of known spunbond fabrics. The lower bond areas allow for filter media 10 to have increase air permeability or inversely low pressure drop when tested at a given air flow. In the exemplary embodiment the basis weight of filter media 10 is about 100 g/m$^2$ to about 330 g/m$^2$, in another embodiment, about 100 g/m$^2$ to about 220 g/m$^2$.

Any suitable synthetic bicomponent fiber 30 can be used to make the nonwoven fabric of filter media 10. Suitable materials for core 32 and sheath 34 of bicomponent fiber 30 include, but are not limited to, polyester, polyamid, polyolefin, thermoplastic polyurethane, polyetherimide, polyphenyl ether, polyphenylene sulfide, polysulfone, aramid, and mixtures thereof. Suitable materials for the sheath of the bicomponent fiber include thermoplastic materials that have a lower melting point than the material of the core of the bi-component fiber, for example polyester, polyamid, polyolefin, thermoplastic polyurethane, polyetherimide, polyphenyl ether, polyphenylene sulfide, polysulfone, aramid, and mixtures thereof.

Referring also to FIG. 5, in the exemplary aspect, corrugations 18 are formed as an alternating up and down substantially V-shaped wave in filter media 10. Wave crests 22 and troughs 24 extend in the direction of travel of the web of substrate through the forming equipment. Troughs 24 have an effective depth D of at least about 0.02 inch (0.5 mm) to permit breathability of filter media 10 at high dust loading to maintain low differential pressure, below about 4 inches water column (wc). A corrugation pitch C in the exemplary aspect is about 3 to about 10 corrugations per inch (about 1.2 to about 3.9 corrugations per cm), and in another aspect, from about 3 to about 6 corrugations per inch (about 1.2 to about 2.4 corrugations per cm). The combination of effective depth D and corrugation pitch C permit optimization of touch points which prevents pleat collapse under high static pressure from high air velocities and dust loadings.

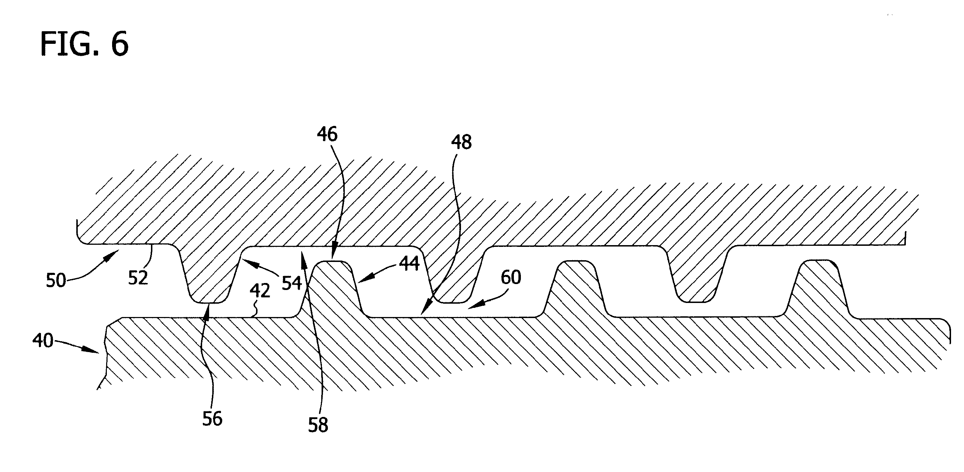

Referring also to FIG. 6, opposing profiled corrugating rolls produce a uniform corrugation over the entire cross-section of filter media 10. A lower corrugating roller 40 includes an outer surface 42 having a plurality of substantially V shaped ribs 44 extending circumferentially around lower roller 40. Ribs 44 are substantially evenly spaced apart along the width of outer surface 42 of lower roller 40 so that outer surface 42 has a plurality of peaks 46 and valleys 48. An upper corrugating roller 50 includes an outer surface 52 having a plurality of substantially V shaped ribs 54 extending circumferentially around upper roller 50. Ribs 54 are substantially evenly spaced apart along the width of outer surface 52 of upper roller 50 so that outer surface 52 has a plurality of peaks 56 and valleys 58. Ribs 44 of lower roller 40 are aligned with valleys 58 of upper roller 50 and ribs 54 of upper roller 50 are aligned with valleys 48 of lower roller 40. The width of ribs 44 and 54 can be any suitable width up to the width of opposing valleys 48 and 58 of lower and upper rollers 40 and 50. A space 60 between ribs 44 and 54 and valleys 48 and 58 respectively define a nip between lower and upper rollers 40 and 50. The nip is less than the thickness of filter media 10 which consolidates filter media 10 when passed between ribs 44 and 54 and respective valleys 48 and 58. The consolidation of filter media 10 at the nip sets corrugations 18 into filter media 10. In operation, the temperature of corrugating rollers 40 and 50 is about 90°C to about 140°C.

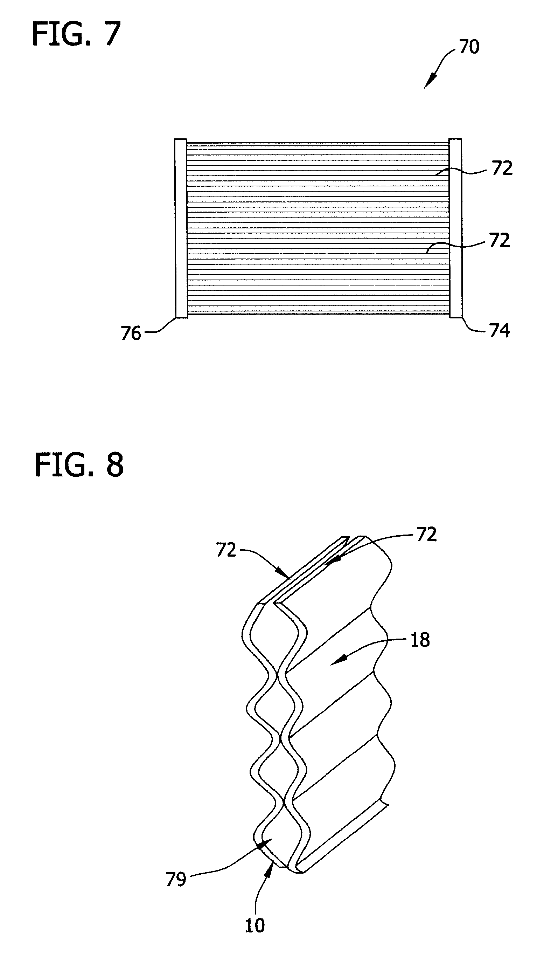

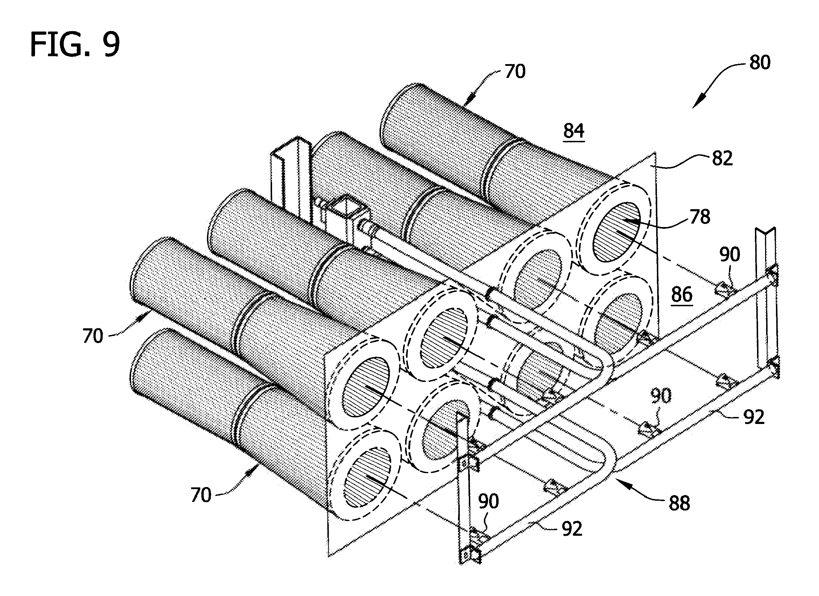

FIG. 7 is a side illustration of a filter element 70 formed from filter media 10. In the exemplary aspect, filter media 10 includes a plurality of pleats 72 arranged so that corrugations 18 act as spacers between pleats 72. Filter element 70 includes a first end cap 74 and an opposing second end cap 76 with filter media 10 extending between end caps 74 and 76. Filter element 70 has a tubular shape with an interior conduit 78 (shown in FIG. 9). Filter element 70 is cylindrical in shape, but can also be conical as shown in FIG. 9. Filter element 70 can also include an inner and/or an outer support liner to provide structural integrity of filter element 70 and/or support for filter media 10. As shown in FIG. 8, corrugations 18 in adjacent pleats 72 of filter element 70 define oval tubes 79 which permit filtered air to flow through filter element 70. In the exemplary embodiment, corrugations 18 extend substantially perpendicular to the edges of pleats 72.

FIG. 9 is a perspective illustration of a filter assembly 80 that includes a plurality of filter elements 70 mounted to a tube sheet 82 in pairs in an end to end relationship.

Tube sheet 82 separates the dirty air side 84 from the clean air side 86 of filter assembly 80. A cleaning system 88 for cleaning filter elements 70 with pulsed air includes a plurality of air nozzles 90 mounted to air supply pipes 92. Pulses of compressed air directed into interior conduit 78 of filter elements 70 are used to clean filter elements 70 of collected dirt and dust.

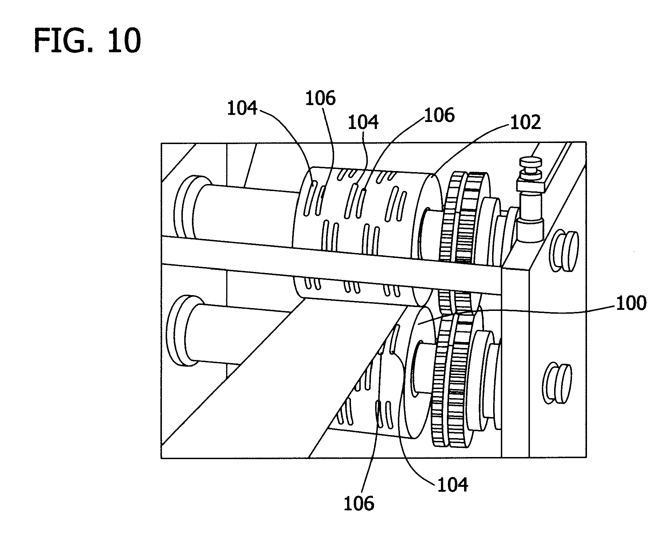

In another exemplary aspect, filter media 10 is embossed using opposed embossing rolls. FIG. 10 is a schematic illustration of a lower embossing roller 100 and an upper embossing roller 102. A plurality of pairs of a rib 104 and a channel 106 are located in an outer surface 108 of lower and upper embossing rollers 100 and 102. Each rib 104 and each channel 106 extend along a portion of the circumference of embossing roller 100 or 102. Also, each pair of a rib 104 and a channel 106 on lower embossing roller 100 is aligned with a corresponding pair of a rib 104 and a channel 106 on upper embossing roller 102 with the ribs and channels arranged so that each rib 104 on lower roller 100 is aligned with and mates with a channel 106 on upper roller 102, and each rib 104 on upper roller 102 is aligned with and mates with a channel 106 on lower roller 102. The plurality of pairs of ribs 104 and channels 106 are spaced apart across embossing rollers 100 and 102 in staggered rows which define an embossing pattern.

Filter media 10 is made by forming a nonwoven fabric using a plurality of bicomponent synthetic fibers 30 with a spunbond process. Filter media 10 is then calendered with embossing calender rolls to form a bond area pattern 31 having a plurality of substantially parallel discontinuous lines 33 of bond area to bond synthetic bicomponent fibers 30 together to form nonwoven fabric base substrate 12. The formed filter media 10 has a filtration efficiency of at least about 50%, measured in accordance with ASHRAE 52.2-1999 test procedure. Filter media 10 is then corrugated using opposing corrugating rollers 40 and 50 at a temperature of about 90°C to about 140°C. In an alternate embodiment, composite filter media 10 is embossed using opposing embossing rollers 100 and 102 at a temperature of about 90°C to about 140°C.

In an alternate embodiment, a nanofiber layer may be applied by electro-blown spinning a polymer solution to form a plurality of nanofibers on at least one side of filter media 10. In the alternate embodiment the calendering step is performed after the application of the nanofiber layer. The resultant filter media has a filtration efficiency of at least about 75%, measured in accordance with ASHRAE 52.2-1999 test procedure. The nanofiber layer is formed by an electro-blown spinning process that includes feeding a polymer solution into a spinning nozzle, applying a high voltage to the spinning nozzle, and discharging the polymer solution through the spinning nozzle while injecting compressed into the lower end of the spinning nozzle. The applied high voltage ranges from about 1 kV to about 300 kV. The electro-blown spinning process of forming nanofibers and the unique apparatus used is described in detail in U.S. Patent Application Publication No. 2005/0067732. The electro-blown spinning process provides a durable three dimensional filtration layer of nanofibers that is thicker than known nanofiber filtration layers on known filter media. In the exemplary aspect the basis weight of the nanofiber membrane layer is about 0.6 $g/m^2$ to about 20 $g/m^2$, in another aspect, about 5 $g/m^2$ to about 10 $g/m^2$. The nanofibers in have an average diameter of about 500 nm or less.

Suitable polymers for forming nanofibers by the electro-blown spinning process are not restricted to thermoplastic polymers, and may include thermosetting polymers. Suitable polymers include, but are not limited to, polyimides, polyamides (nylon), polyaramides, polybenzimidazoles, polyetherimides, polyacrylonitriles, polyethylene terephthalate, polypropylene, polyanilines, polyethylene oxides, polyethylene naphthalates, polybutylene terephthalate, styrene butadiene rubber, polystyrene, polyvinyl chloride, polyvinyl alcohol, polyvinylidene chloride, polyvinyl butylene and copolymer or derivative compounds thereof. The polymer solution is prepared by selecting a solvent that dissolves the selected polymers. The polymer solution can be mixed with additives, for example, plasticizers, ultraviolet ray stabilizers, crosslink agents, curing agents, reaction initiators, and the like. Although dissolving the polymers may not require any specific temperature ranges, heating may be needed for assisting the dissolution reaction.

It can be advantageous to add plasticizers to the various polymers described above, in order to reduce the $T_g$ of the fiber polymer. Suitable plasticizers will depend upon the polymer, as well as upon the particular end use of the nanofiber layer. For example, nylon polymers can be plasticized with water or even residual solvent remaining from the electrospinning or electro-blown spinning process. Other plasticizers which can be useful in lowering polymer $T_g$ include, but are not limited to, aliphatic glycols, aromatic sulphanomides, phthalate esters, including but not limited to, dibutyl phthalate, dihexl phthalate, dicyclohexyl phthalate, dioctyl phthalate, diisodecyl phthalate, diundecyl phthalate, didodecanyl phthalate, and diphenyl phthalate, and the like.

The following examples are presented for the purpose of illustration only and are not intended to limit the scope of the claims.

EXAMPLES

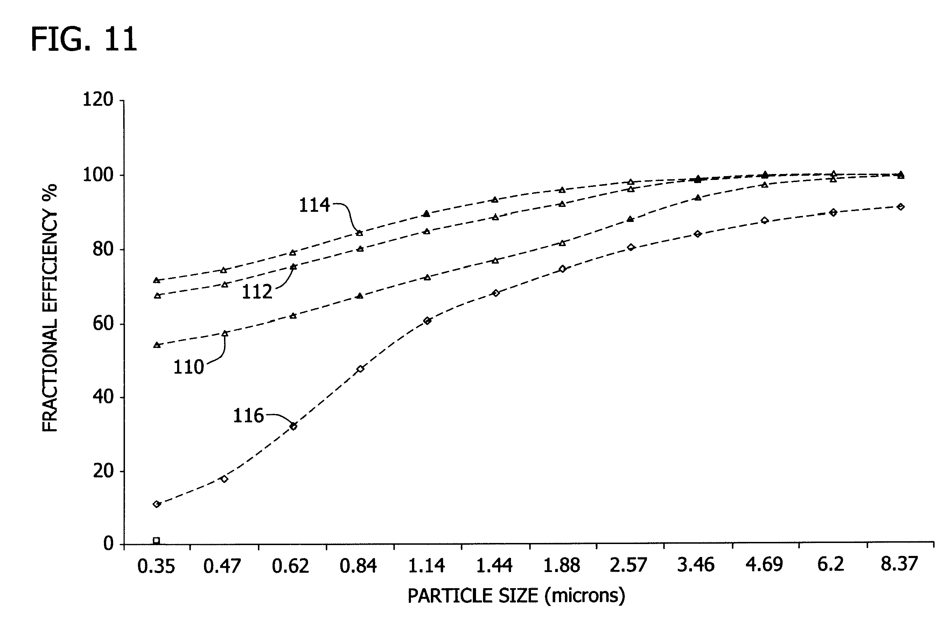

Flat sheets of filter media 10 test samples having various basis weights were compared to a comparative base media substrate in a flat sheet fractional efficiency test in accordance ASHRAE 52.2-1999 test method. Air containing KCl particles was directed through each test sample at a flow rate of about 10 ft/min. FIG. 11 shows a graphical representation of the comparison test. Line 110 represents filter media 10 at a basis weight of 150g/m$^2$, line 112 represents filter media 10 at a basis weight of 200g/m$^2$, and line 114 represents filter media 10 at a basis weight of 260g/m$^2$. Line 116 represents a comparative base media substrate. Filter media 10 at each basis weight has a higher efficiency than the comparative filter media substrate over the entire range of particle sizes of the KCl particles.

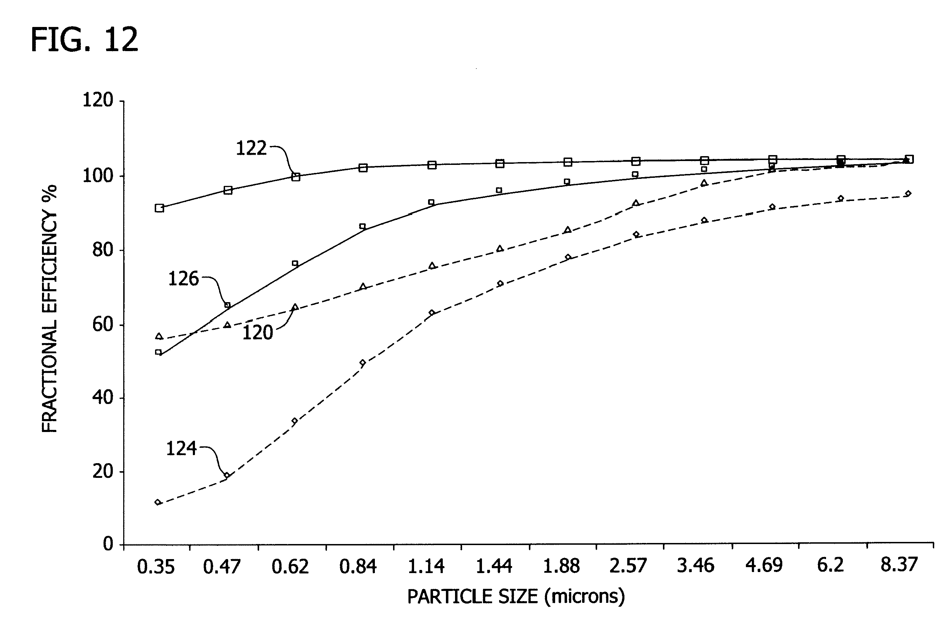

Flat sheets of filter media 10, and filter media 10 including a nanofiber layer were compared to a comparative base media substrate with and without a nanofiber layer in a flat sheet fractional efficiency test in accordance ASHRAE 52.2-1999 test method. Air containing KCl particles was directed through each test sample at a flow rate of about 10 ft/min. FIG. 12 shows a graphical representation of the comparison test. Line 120 represents filter media 10 at 150g/m$^2$, and line 122 represents filter media 10 at 150g/m$^2$, including a nanofiber layer. Line 124 represents a comparative media substrate and line 126 represents the comparative media substrate including a nanofiber layer. Filter media 10 with and without the nanofiber layer had a higher efficiency than the comparative filter media substrate with and without a nanofiber layer over the entire range of particle sizes of the KCl particles.

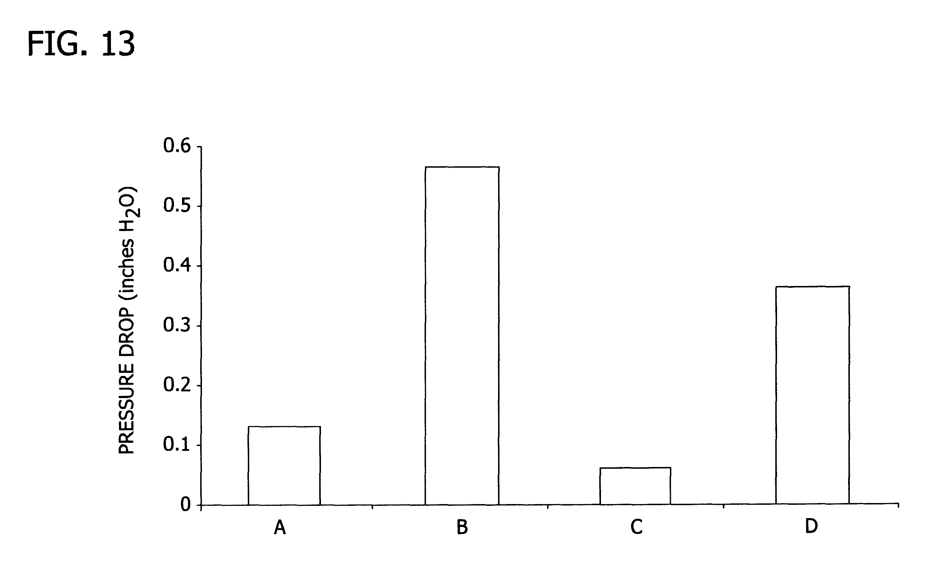

Flat sheets of filter media 10, and filter media 10 including a nanofiber layer were compared to a comparative base media substrate with and without a nanofiber layer in a flat sheet pressure drop test in accordance ASHRAE 52.2-1999 test method. Air containing KCl particles was directed through each test sample at a flow rate of about 10 ft/min. FIG. 13 shows a graphical representation of the comparison test. Bar A represents a comparative filter media substrate and bar B represents the comparative filter media substrate including a nanofiber layer. Bar C represents filter media 10 at 150g/m$^2$, and bar D represents filter media 10 at 150g/m$^2$, including a nanofiber layer. Filter media 10 with and without a nanofiber layer had a lower pressure drop than the comparative base substrate with and without a nanofiber layer.

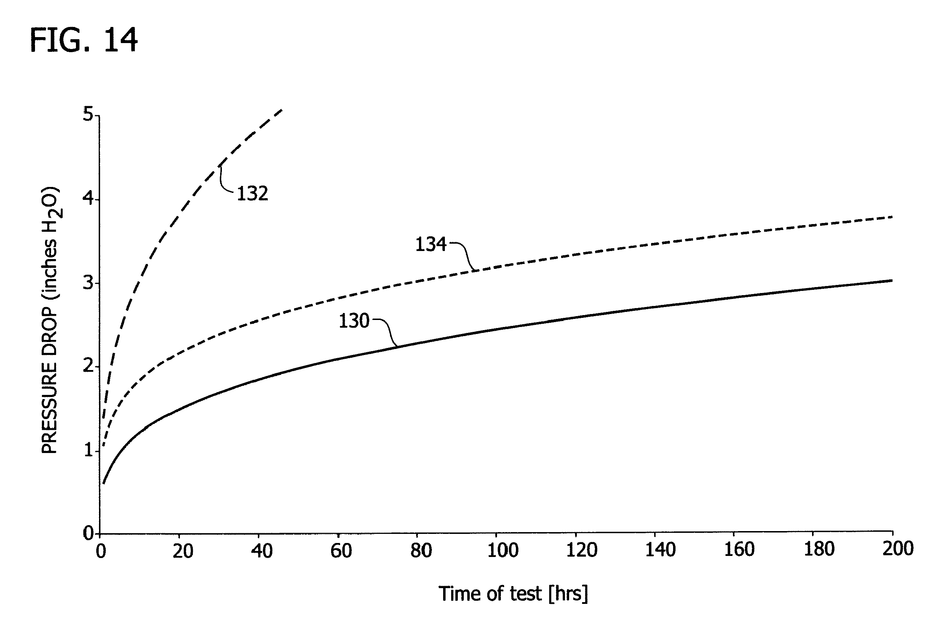

Filter element 70 containing filter media 10 was compared to a known filter element formed from a wet-laid synthetic filter media substrate, and a known filter element formed from a wet-laid cellulose-synthetic blend filter media substrate in a 200 hour duration dust rejection test. Dust laden air was directed into a test filter module having a capacity of at least 3,000 CFM with the dust concentration feed rate of 0.57 g/m$^3$. The test filters were pulse-jet cleaned at a predetermined cycle time at a pulse air pressure of 100 psig (700 kPa gauge). The test filter module differential pressure was monitored throughout the 200 hour test duration. The 200 hour test procedure is described in the Saudi Aramco Materials System Specification 32-SAMSS-008, titled INLET AIR FILTRATION SYSTEMS FOR COMBUSTION GAS TURBINES, issued October 26, 2005, Apendix II, phase 2. FIG. 14 shows a graphical representation of the test results over the 200 hour duration. Line 130 represents the differential pressure of filter element 70 containing filter media 10, and line 132 represents the differential pressure of the known filter element formed from the wet-laid synthetic filter media substrate, and line 134 represents the differential pressure of the known filter element formed from the wet-laid cellulose-synthetic blend filter media substrate, over the 200 hour test duration. Filter element 70 has a lower differential pressure than the known filter elements for the entire duration of the test.

The above described filter elements 70 formed from filter media 10 can be used for filtering an air stream in almost any application, for example, for filtering gas turbine inlet air. The unique construction of filter media 10 is more durable than known filter media and provides for lower pressure drop build-up because of less deflection from the forces exerted on the filter media during the filtering and reverse cleaning operations due to the corrugation construction. Filter elements 70 have produced an average efficiency greater than about 50% capture of the most penetrating particle size of aerosol or dust (about 0.3 to about 0.4 micron) as compared to about 5-30% of known filter elements.

The example filter media of Examples 1-2 and Comparative Examples 3-7 illustrate a comparison of embodiments of filter media 10 with known filter media. Efficiency, resistance and quality factor were measured for each filter media of Examples 1-2 and Comparative Examples 3-7. Efficiency was measured in accordance with ASHRAE 52.2-1999 test procedure, resistance was measured in accordance with EN-1822 (1998), and quality factor $Q_f$ was calculated as described above.

Example 1 is a spunbond polyester bicomponent fiber filter media substrate, and Example 2 is the filter media substrate of Example 1 plus a 2 g/m$^2$ nanofiber layer formed by an electro-blown spinning process. Comparative Example 3 is a known drylaid polyester filter media substrate, and Comparative Example 4 is the known drylaid polyester filter media substrate of Comparative Example 3 plus a 2 g/m$^2$ nanofiber layer. Comparative Example 5 is a wet-laid synthetic paper plus a <0.5 g/m$^2$ nanofiber layer. Comparative Example 6 is a wet-laid synthetic paper, and Comparative Example 7 is the wet-laid synthetic paper of Example 6 plus a 20 g/m$^2$ meltblown fiber layer. The example results are shown in Table I below. When Example 2 is compared to composites in Comparative Examples 4, 5, and 7 efficiency is not sacrificed at the expense of reducing resistance which yields the associated high Quality Factor values.

TABLE I

| Example | Basis Weight (g/m$^2$) | Efficiency (%) | Resistance (mm H$_2$O) | Quality Factor |
|---|---|---|---|---|
| Example 1 Spunbond Polyester Bicomponent Fiber Media | 158.6 | 57.0 | 1.78 | 525 |
| Example 2 Spunbond Polyester Bicomponent Fiber Media + 2 g/m$^2$ Nanofiber Layer | 154.6 | 80.2 | 3.43 | 534 |
| Comparative Example 3 Drylaid Polyester Media | 234.9 | 28.7 | 9.3 | 40 |
| Comparative Example 4 Drylaid Polyester Media + 2 g/m$^2$ Nanofiber Layer | 236.3 | 43.2 | 13.81 | 45 |
| Comparative Example 5 Wet laid Synthetic Paper +<0.5 g/m$^2$ Nanofiber Layer | 121.2 | 40.5 | 9.77 | 59 |
| Comparative Example 6 Wetlaid Synthetic Paper | 133.4 | 9.0 | 7.67 | 14 |
| Comparative Example 7 Wetlaid Synthetic Paper + 20 g/m$^2$ Meltblown Fiber Layer | 150.2 | 86.4 | 8.79 | 251 |
| Efficiency measured at 0.3 microns, 5.3 cm/s face velocity (ASHRAE 52.2-1999). Resistance measured in accordance with EN-1822 (1998). Quality Factor defined by the equation: $Q_f = -25000 \cdot \log(P/100)/\Delta p$ | | | | |

For completeness, various aspects of the invention are now set out in the following numbered clauses:

1. A filter media for a filter element, said filter media comprising:

a nonwoven synthetic fabric formed from a plurality of bicomponent synthetic fibers with a spunbond process, and having a bond area pattern comprising a plurality of substantially parallel discontinuous lines of bond area, said filter media having a minimum filtration efficiency of about 50%, measured in accordance with ASHRAE 52.2-1999 test procedure;

said filter media further comprising an embossing pattern or a plurality of corrugations, said embossing pattern or said corrugations formed using opposing rollers at a temperature of about 90°C to about 140°C.

2. A filter media in accordance with clause 1, wherein said plurality of bicomponent fibers comprise a core material and a sheath material, said sheath material having a lower melting point than said core material, said core material comprising at least one of polyester fibers, polyamid fibers, polyolefin fibers, thermoplastic polyurethane fibers, polyetherimide fibers, polyphenyl ether fibers, polyphenylene sulfide fibers, polysulfone fibers, and aramid fibers.

3. A filter media in accordance with clause 1, wherein said nonwoven synthetic fabric comprises a basis weight of about 100 g/m$^2$ to about 300 g/m$^2$.

4. A filter media in accordance with clause 1, wherein said nonwoven synthetic fabric comprises a bond area of about 10% to about 14% of an area of said nonwoven fabric mat.

5. A filter media in accordance with clause 1, wherein said bicomponent fibers comprise an average diameter of about 12 to about 18 microns.

6. A filter media in accordance with clause 1, wherein said plurality of corrugations comprise a plurality of alternating peaks and valleys extending a length of the composite filter media.

7. A filter media in accordance with clause 1, wherein said plurality of corrugations comprise alternating up and down substantially V-shaped corrugations.

8. A filter media in accordance with clause 1, wherein said filter media comprises a corrugation pitch of about 3 to about 10 corrugations per inch and an effective depth of at least about 0.02 inch.

9. A tilter media in accordance with clause 1, wherein said embossing pattern comprises a plurality of pairs of a rib and a channel, the plurality of pairs spaced apart and arranged in staggered rows.

10. A filter media in accordance with clause 1, further comprising a plurality of pleats.

**Claims**

1. A gas turbine air inlet filter element (70) comprising:

   a first end cap (74);
   a second end cap (76); and
   a filter media (10); said filter media comprising:

   a nonwoven synthetic fabric formed from a plurality of bicomponent synthetic fibers with a spunbond process, and having a bond area pattern (31) comprising a plurality of substantially parallel discontinuous lines (33) of bond area, said filter media having a minimum filtration efficiency of about 50%, measured in accordance with ASHRAE 52.2-1999 test procedure;
   said filter media further comprising an embossing pattern or a plurality of corrugations, said embossing pattern or said corrugations formed using opposing rollers (100,102) at a temperature of about 90°C to about 140°C.

2. A filter element (70) in accordance with claim 1 wherein the plurality of bicomponent fibers (30) comprise a core material (32) and a sheath material, said sheath material having a lower melting point than said core material, said core material comprise at least one of polyester fibers, polyamid fibers, polyolefin fibers, thermoplastic polyurethane fibers, polyetherimide fibers, polyphenyl ether fibers, polyphenylene sulfide fibers, polysulfone fibers, and aramid fibers.

3. A filter element (70) in accordance with claim 1 or claim 2 wherein said nonwoven synthetic fabric comprises a basis weight of about 100 $g/m^2$ to about 300 $g/m^2$.

4. A filter element (70) in accordance with any preceding claim wherein said nonwoven synthetic fabric comprises a bond area of about 10% to about 14% of an area of said nonwoven fabric mat.

5. A filter element (70) in accordance with any preceding claim wherein said bicomponent fibers comprise an average diameter of about 12 to about 18 microns.

6. A filter element (70) in accordance with any preceding claim wherein said plurality of corrugations comprise a plurality of alternating peaks (46) and valleys (48) extending a length of the composite filter media (10).

7. A filter element (70) in accordance with any one of claims 1 to 5 wherein said plurality of corrugations (18) comprise alternating up and down substantially V-shaped corrugations.

8. A filter element (70) in accordance with any preceding claim wherein said composite filter media (10) structure comprises a corrugation pitch of about 3 to about 10 corrugations (18) per inch and an effective depth of at least about 0.02 inch.

9. A filter element (70) in accordance with any one of claims 1 to 5 wherein said embossing pattern comprises a plurality of pairs of a rib (104) and a channel (106), the plurality of pairs spaced apart and arranged in staggered rows.

10. A filter element (70) in accordance with any preceding claim wherein said filter media (10) further comprises a plurality of pleats (72).

# FIG. 1

# FIG. 5

# FIG. 2

# FIG. 3

# FIG. 4

FIG. 6

**FIG. 7**

70

72

72

76          74

**FIG. 8**

72          72

18

79

10

FIG. 9

**FIG. 10**

# FIG. 11

EP 2 198 945 A2

# FIG. 12

EP 2 198 945 A2

FIG. 13

EP 2 198 945 A2

# FIG. 14

EP 2 198 945 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050067732 A